**Europäisches Patentamt**

**European Patent Office**

**Office européen des brevets**

(19)

(11) Veröffentlichungsnummer: **0 281 836**
**B1**

(12) # EUROPÄISCHE PATENTSCHRIFT

(45) Veröffentlichungstag der Patentschrift:
29.08.90

(51) Int. Cl.⁵: **F16G 11/12**

(21) Anmeldenummer: **88102670.2**

(22) Anmeldetag: **24.02.88**

(54) Gurtanschlussvorrichtung.

(30) Priorität: **06.03.87 DE 8703372 U**

(43) Veröffentlichungstag der Anmeldung:
**14.09.88 Patentblatt 88/37**

(45) Bekanntmachung des Hinweises auf die Patenterteilung:
**29.08.90 Patentblatt 90/35**

(84) Benannte Vertragsstaaten:
**AT CH DE FR GB LI SE**

(56) Entgegenhaltungen:
**EP-A- 0 145 646**
**DE-A- 3 215 723**
**US-A- 3 120 403**
**US-A- 3 884 450**
**US-A- 3 988 007**

(73) Patentinhaber: **EISEN- UND DRAHTWERK ERLAU AKTIENGESELLSCHAFT, Erlau 16, D-7080 Aalen(DE)**

(72) Erfinder: **Müller, Anton Dipl.-Ing.(FH), Brandweg 9, D-7080 Aalen-Unterkochen(DE)**
Erfinder: **Schinko, Hermann Dipl.-Ing.(FH), Lindenstrasse 31, D-7088 Hüttlingen(DE)**

(74) Vertreter: **Jackisch-Kohl, Anna-Katharina et al, Patentanwälte Jackisch-Kohl & Kohl Stuttgarter Strasse 115, D-7000 Stuttgart 30(DE)**

**Beschreibung**

Die Erfindung betrifft eine Gurtanschlußvorrichtung nach dem Oberbegriff des Anspruches 1.

Bei dieser bekannten Gurtanschlußvorrichtung (DE-A 3 215 723) ist der Anschlußteil durch einen Steckbolzen gebildet, der an seinem einen Ende den radial abstehenden Sperrzahn aufweist, mit dem er in der Raststellung in die Rastausnehmung des Trägers eingreift. Soll der Anschlußteil mit dem Gurt verbunden werden, wird der Anschlußteil gegen Federkraft so weit verschoben, bis der Sperrzahn von der Rastausnehmung freikommt. Anschließend wird er um 180° gedreht, bis der Rastzahn in den Bereich einer Durchtrittsöffnung im Träger gelangt. Der Anschlußteil kann dann axial zurückgeschoben werden. Der anzuschließende Gurt weist an seinem Ende Schlaufen auf, durch welche anschließend der Anschlußteil geschoben wird. Er wird dann über den Sperrzahn wieder am Träger verrastet. Mit dem Anschlußteil kann der Gurt nicht aufgewickelt werden, sondern der Gurt kann nur entsprechend seiner Zahl von Schlaufen in unterschiedlichen Lagen am Träger befestigt werden.

Der Erfindung liegt die Aufgabe zugrunde, die gattungsgemäße Gurtanschlußvorrichtung so auszubilden, daß bei kleinen räumlichen Abmessungen der Gurt auf den Anschlußteil aufgewickelt und dauerhaft gesichert werden kann.

Diese Aufgabe wird bei der gattungsgemäßen Gurtanschlußvorrichtung erfindungsgemäß mit den kennzeichnenden Merkmalen des Anspruches 1 gelöst.

In den Einführschlitz des Anschlußteiles der erfindungsgemäßen Gurtanschlußvorrichtung kann das entsprechende Gurtende leicht eingeschoben werden. Durch Drehen des Anschlußteiles wird dann das Gurtende aufgewickelt. Mit den beiden Sperrzähnen wird der Anschlußteil in der Einfädelstellung sicher gegen die Federkraft am Träger abgestützt, so daß der Anschlußteil nach dem Einstecken des Gurtendes einfach gedreht werden kann. Sobald die Sperrzähne nach einer 360° Drehung in den Bereich der Rastausnehmungen gelangen, rasten sie unter der Federkraft selbsttätig in die Rastausnehmungen ein. Es besteht keine Gefahr, daß der Anschlußteil nicht ausreichend weit gedreht wird. Dadurch ist sichergestellt, daß der Gurt stets ausreichend weit auf das Anschlußteil gewickelt wird. Da die Sperrzähne am Anschlußteil vorgesehen sind, hat die erfindungsgemäße Gurtanschlußvorrichtung einen konstruktiv einfachen Aufbau. Insbesondere benötigt sie nur eine geringe Länge, weil vom Anschlußteil gesonderte Sperreinrichtungen entfallen. Dadurch kann die erfindungsgemäße Gurtanschlußvorrichtung beispielsweise an Ratschen vorgesehen werden, ohne daß die Ratsche übermäßig lang wird. Die Gurtanschlußvorrichtung kann darüber hinaus auch mit einem Anschlußstück versehen sein, an das Haken, Schäkel und dergleichen angeschlossen werden können. Sowohl bei der Verbindung mit einer Ratsche als auch bei der Ausführung mit dem Anschlußstück wird die gleiche Ausbildung des Anschlußteiles mit der Drehsicherung verwendet, so daß der Aufwickelmechanismus in beiden Fällen gleich ist, was sich vorteilhaft für die Bedienung auswirkt.

Weitere Merkmale der Erfindung ergeben sich aus den weiteren Ansprüchen, der Beschreibung und den Zeichnungen.

Die Erfindung wird anhand zweier Ausführungsbeispiele näher erläutert. Es zeigen

Fig. 1 eine erste Ausführungsform einer erfindungsgemäßen Gurtanschlußvorrichtung, die Bestandteil einer Vorspannanzeige einer Ratsche ist, in Draufsicht und teilweise im Schnitt,

Fig. 2 die Gurtanschlußvorrichtung mit der Ratsche gemäß Fig. 1 in Seitenansicht und teilweise im Schnitt,

Fig. 3 die Gurtanschlußvorrichtung gemäß Fig. 1 in vergrößerter Darstellung und teilweise im Schnitt,

Fig. 4 die Gurtanschlußvorrichtung gemäß Fig. 3 in Seitenansicht,

Fig. 5 eine zweite Ausführungsform einer erfindungsgemäßen Gurtanschlußvorrichtung im Schnitt,

Fig. 6 die Gurtanschlußvorrichtung gemäß Fig. 5 in Seitenansicht und teilweise im Schnitt,

Fig. 7 eine dritte Ausführungsform einer erfindungsgemäßen Gurtanschlußvorrichtung in Seitenansicht und teilweise im Schnitt

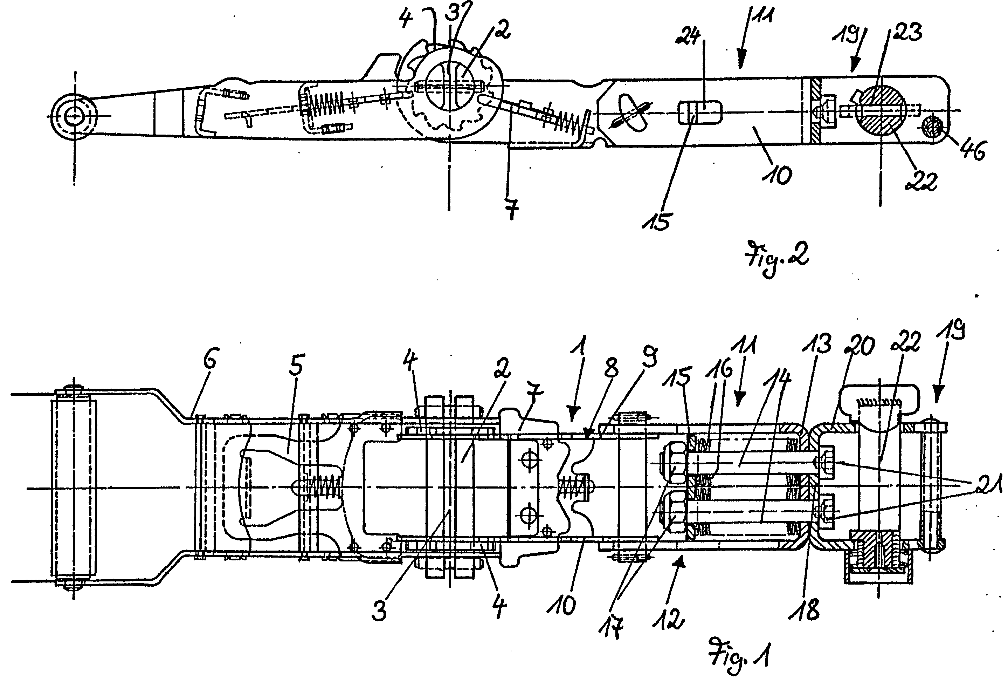

Die Gurtanschlußvorrichtung nach den Fig. 1 bis 4 wird an eine Ratsche 1 angeschlossen. Sie hat eine drehbar gelagerte Antriebswalze 2 mit einem Durchführschlitz 3 für ein Gurtende. Die Antriebswalze 2 ist mit mindestens einem Klinkenrad 4 drehfest verbunden, in das eine Antriebsklinke 5 unter Federkraft eingreift. Sie ist in einem um die Achse der Antriebswalze 2 schwenkbaren Antriebsteil 6 untergebracht. Ein Zurückdrehen des Klinkenrades 4 wird durch eine Sperrklinke 7 verhindert, die in bekannter Weise in der Ratsche 1 verschiebbar gelagert ist und unter Federkraft in das Klinkenrad 4 eingreift. Die Sperrklinke 7 ist in einem Anschlußteil 8 der Ratsche gelagert, der zwei zueinander parallele Schenkel 9 und 10 aufweist. An dem von der Antriebswalze 2 abgewandten Ende der Schenkel 9, 10 ist die Vorspannkraftanzeige 11 lösbar befestigt. Sie hat ein U-förmiges Anschlußstück 12, dessen Quersteg 13 von zwei Führungsbolzen 14 durchsetzt ist, auf denen ein plattenförmiges Widerlager 15 für Druckfedern 16 gelagert ist. Das Widerlager 15 stützt sich unter der Kraft der Druckfedern 16, die im Ausführungsbeispiel durch Tellerfederpakete gebildet sind, an Muttern 17 ab, die auf die Gewindeenden der Führungsbolzen 14 geschraubt sind. Sie durchsetzen ferner einen Quersteg 18 eines Trägers 20 der Gurtanschlußvorrichtung 19. Die Köpfe 21 der Führungsbolzen 40 stützen sich am Quersteg 18 des Trägers 20 auf der vom Anschlußstück 12 abgewandten Seite ab und können mit dem Quersteg verschweißt sein.

Im Träger 20 der Gurtanschlußvorrichtung 19 ist ein Aufwickelteil 22 für einen Gurt drehbar gelagert.

Die Ratsche 1 mit der Gurtanschlußvorrichtung 19 wird zum Verzurren von Gurten verwendet. Das eine Gurtende wird durch den Einführschlitz 3 der Antriebswalze 2 gesteckt, während das andere Gurtende durch einen Einführschlitz 23 des Aufwickelteiles 22 gesteckt wird. Der Aufwickelteil 22 wird dann wenigstens um 360° gedreht, wobei das Gurtende auf den Aufwickelteil gewickelt wird. Anschließend wird mit dem Antriebsteil 6 in bekannter Weise das andere Gurtende auf die Antriebswalze 2 gewickelt und hierbei der Gurt verzurrt. Sobald die Verzurrspannung einen bestimmten Wert überschreitet, wird die Ratsche 1 bzw. die Gurtanschlußvorrichtung 19 relativ zum jeweils anderen Teil gegen die Kraft der Druckfedern 16 verschoben. Das Widerlager 15 dient hierbei als Kraftanzeige. In den Schenkeln 9, 10 des Anschlußteiles 8 ist eine Öffnung 24 vorgesehen, so daß die Lage des Widerlagers 15 erkennbar ist. Längs des Öffnungsrandes ist eine Markierung vorgesehen, welche die Zugspannung angibt. Somit kann die jeweilige Zurrspannung einfach durch die Lage des Widerlagers 15 erkannt werden.

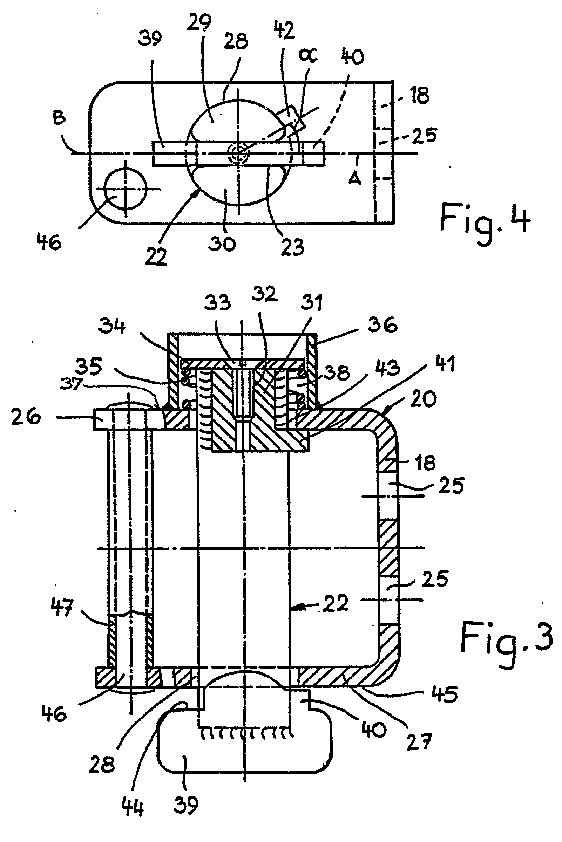

Wie die Fig. 3 und 4 im einzelnen zeigen, ist der Träger 20 aus einem Blechteil U-förmig gebogen. Im Quersteg 18 sind zwei Durchgangsöffnungen 25 für die Führungsbolzen 14 vorgesehen. Die Schenkel 26, 27 weisen jeweils eine kreisförmige Öffnung 28 für den Aufwickelteil 22 auf. Er wird von zwei im Querschnitt etwa halbkreisförmigen Profilteilen 29, 30 gebildet, ·deren einander gegenüberliegenden Seiten parallel verlaufen und den Einführschlitz 23 begrenzen. Im Bereich außerhalb des Einführschlitzes sind die Profilteile 29, 30 fest miteinander verbunden, vorzugsweise verschweißt.

Der Aufwickelteil 22 ragt mit beiden Enden durch die entsprechenden Öffnungen 28. Das eine Ende 31 ist massiv ausgebildet und weist eine stirnseitig mündende Gewindebohrung 32 auf, in die eine Senkschraube 33 geschraubt ist, mit der ein plattenförmiges Widerlager 34 auf das verdickte Ende 31 geschraubt ist. Das Widerlager 34 hat kreisförmigen Umriß und größeren Radius als das verdickte Ende 31. Am Widerlager 34 stützt sich eine Druckfeder 35 ab, die außerdem auf der Außenseite des Schenkels 26 unmittelbar neben der Öffnung 28 abgestützt ist (Fig. 3). Das Ende 31, das Widerlager 34 und die Druckfeder 35 sind von einer Hülse 36 mit geringem Abstand umgeben, die auf die Außenseite 37 des Trägerschenkels 26 koaxial zur Öffnung 28 aufgeschweißt ist. Die Druckfeder 35 liegt dadurch geschützt in einem Ringraum 38 zwischen dem Aufwickelteilende 31 und der Hülse 36. Axial nach außen ist der Ringraum 38 durch das Widerlager 34 im wesentlichen abgedeckt.

Am gegenüberliegenden Ende ist der Aufwickelteil 22 mit einem Griff 39 versehen, mit dem er um seine Achse gedreht werden kann. Der Griff 39 ist stegförmig ausgebildet (Fig. 4), so daß er bequem mit der Hand erfaßt werden kann. Die Länge des Griffes 39 ist größer als der Durchmesser der Öffnung 28 (Fig. 4). An seiner dem Ende 31 zugewandten Seite ist der Griff 39 mit einem Sperrzahn 40 versehen, der vorzugsweise einstückig mit dem Griff ausgebildet ist. Am gegenüberliegenden Ende 31 ist auf der dem Griff 39 zugewandten Seite ein weiterer Sperrzahn 41 vorgesehen, der ebenfalls vorzugsweise einstückig mit dem Aufwickelteil 22 ausgebildet ist. Die beiden Sperrzähne 40, 41 nehmen die gleiche Lage in bezug auf den Aufwickelteil ein, liegen also fluchtend zueinander. Die Sperrzähne können außerdem gleiche Abmessungen haben. Ihnen ist in den Trägerschenkeln 26, 27 jeweils eine Rastaussparung 42, 43 zugeordnet, in welche die Sperrzähne in einer Raststellung eingreifen. Dann ist der Aufwickelteil 22 gegen Drehen gesichert.

In der Raststellung steht der Aufwickelteil 22 unter der Kraft der Druckfeder 35, welche den Aufwickelteil in seine Raststellung belastet. In ihr liegt der Griff 39 mit seiner dem Träger 20 zugewandten Unterseite 44 an der vom Trägerschenkel 26 abgewandten Außenseite 45 des Trägerschenkels 27 an. In dieser Raststellung liegt das Widerlager 34 am gegenüberliegenden Ende noch innerhalb der Hülse 36; vorzugsweise schließt sie mit dem oberen Rand der Hülse 36 ab, so daß ein nahezu glatter Abschluß der Hülse gebildet wird. Die Rastaussparungen 42, 43 liegen, wie sich aus Fig. 4 ergibt, unter einem spitzen Winkel $\alpha$ zur Längsachse der Trägerschenkel 26, 27. Der Sperrzahn 40 liegt mit seiner Längsachse A fluchtend zur Längsachse B des Griffes 39. Außerdem liegt die Längsachse des Einführschlitzes 23 in der Längsmittelebene des Griffes 39. Wenn sich daher der Aufwickelteil 22 in seiner Raststellung befindet, liegt der Einführschlitz 23 unter dem Winkel $\alpha$ zur Längsmittelebene der Trägerschenkel 26, 27. Soll das Gurtende in den Einführschlitz 23 geschoben werden, muß der Aufwickelteil 22 zunächst aus seiner Raststellung in seine Gurteinführstellung gebracht werden. Hierzu ist es notwendig, den Aufwickelteil 22 gegen die Kraft der Druckfeder 35 so weit axial zu verschieben, bis die Sperrzähne 40, 41 aus den Rastaussparungen 42, 43 freikommen. Anschließend kann der Aufwickelteil mit dem Griff 39 so weit gedreht werden, daß der Einführschlitz 23 in Gurteinführrichtung liegt. Diese Lage ist in den Fig. 3 und 4 dargestellt. Die Längsmittelebene des Einführschlitzes 23 und damit des Griffes 39 liegt dann in einer Ebene mit der Längsmittelebene der Trägerschenkel 26, 27. Das Gurtende läßt sich dann leicht in den Einführschlitz 23 schieben. Anschließend wird der Aufwickelteil 22 mit dem Griff 39 gedreht, bis die Sperrzähne 40, 41 wieder in den Bereich der Rastaussparungen 42, 43 gelangen und unter der Kraft der Druckfeder 35 in sie einrasten. Durch erneutes Axialverschieben und Drehen kann das Gurtende dann weiter aufgewickelt werden.

Die Handhabung der Gurtanschlußvorrichtung 19 ist einfach, so daß sie auch von ungeübten Personen ohne Schwierigkeiten bedient werden kann. In der Raststellung ist der Aufwickelteil 22 einwandfrei gegen unbeabsichtigtes Verdrehen gesichert, so daß die Verzurrung nicht ungewollt gelöst werden kann. Zum Lösen der Verzurrung muß der Aufwickelteil 22 bewußt von Hand axial gegen die Federkraft verschoben werden. Da der Aufwickelteil 22 in der Raststellung in beiden Drehrichtungen gesichert ist, ist ausgeschlossen, daß während des Betriebes der Aufwickelteil unbeabsichtigt verdreht wird. Da die Hülse 36 das Widerlager 34 und die Druckfeder 35 umgibt, dient sie auch als Schutz gegen unbeabsichtigtes Betätigen des Aufwickelteiles. Da die Sperrzähne 40, 41 Bestandteil des Aufwickelteiles 22 sind, ist die Montage der Gurtanschlußvorrichtung 19 einfach durchzuführen. Falls die Druckfeder 35 beschädigt werden sollte, kann sie nach Lösen der Schraube 33 und Abnehmen des Widerlagers 34 einfach ausgewechselt werden. In der Raststellung liegt die Anschlagfläche 44 des Griffes 39 an der Außenseite 45 des Trägerschenkels 27 unter der Kraft der Druckfeder 35 an, so daß der Aufwickelteil 22 einwandfrei in Axialrichtung gesichert ist.

Die freien Enden der beiden Trägerschenkel 26, 27 sind durch einen Bolzen 46 miteinander verbunden, auf dem ein Distanzrohr 47 gelagert ist, das an den Innenseiten der Trägerschenkel anliegt. Das Distanzrohr 47 dient als Gurtführung und liegt bei der Stellung der Ratsche 1 gemäß Fig. 2 nahe dem unteren Rand der Gurtanschlußvorrichtung 19.

Die Gurtanschlußvorrichtung 19 benötigt nur wenig Einbauraum, insbesondere der Aufwickelteil 22 mit der Drehsicherung, so daß die Gurtanschlußvorrichtung hervorragend überall dort eingesetzt werden kann, wo nur wenig Einbauraum bzw. Einbaulänge zur Verfügung steht. Die Ratsche 1 mit der lösbar angeschlossenen Gurtanschlußvorrichtung 19 hat darum eine verhältnismäßig kleine Länge.

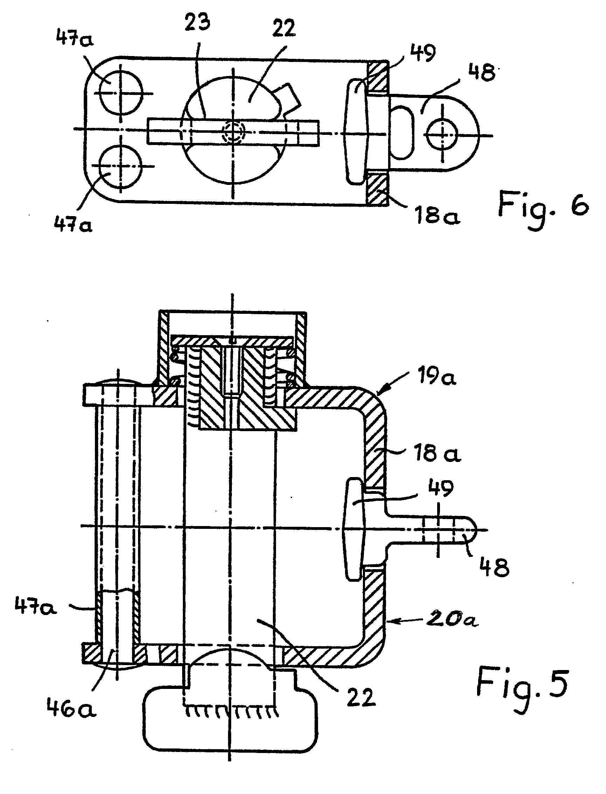

Die Gurtanschlußvorrichtung 19a nach den Fig. 5 und 6 ist im wesentlichen gleich ausgebildet wie die zuvor beschriebene Ausführungsform. Anstelle der Öffnungen 25 ist im Quersteg 18a ein Anschlußstück 48 drehbar gelagert, an das ein Haken, ein Schäkel oder andere Bauteile angeschlossen werden können. Das Anschlußstück 48 hat einen Kopf 49, der sich an der Innenseite des Quersteges 18a abstützt. Der Aufwickelteil 22 mit der Drehsicherung ist gleich ausgebildet wie beim vorigen Ausführungsbeispiel.

Anstelle der einen Gurtführung ist die Gurtanschlußvorrichtung 19a mit zwei Gurtführungen 47a versehen, die jeweils durch ein Distanzrohr gebildet werden, die auf den Bolzen 46a sitzen. In der Einfädelstellung (Fig. 6), liegt der Einführschlitz 23 des Aufwickelteiles 20, in Einfädelrichtung gesehen, mittig zwischen den beiden Gurtführungen 47a, so daß das Gurtende bequem zwischen den beiden Gurtführungen hindurch in den Einführschlitz geschoben werden kann. Selbstverständlich kann auch die Ausführungsform nach den Fig. 1 bis 4 zwei solche Gurtführungen aufweisen.

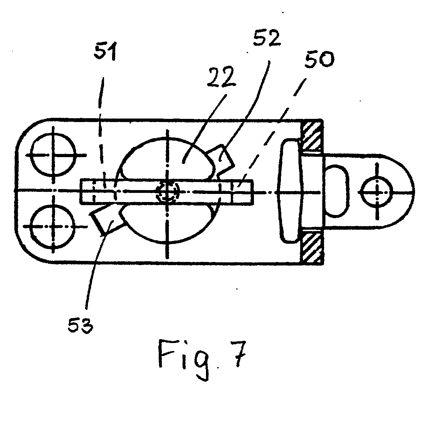

Da der Aufwickelteil 22 mit zwei Sperrzähnen 40 und 41 versehen ist, können verhältnismäßig große Verzurrkräfte aufgenommen werden. Zur Erhöhung der Festigkeit kann der Aufwickelteil auch mehr Sperrzähne aufweisen. So können an den beiden Enden des Aufwickelteiles 22 beispielsweise jeweils zwei Sperrzähne 50,51 vorgesehen sein Fig. 7, die diametral einander gegenüberliegend angeordnet sind. Damit der Aufwickelteil 22 nicht schon nach einer Drehung von etwa 180° wieder in seine Raststellung gelangt, sind die beiden Sperrzähne 50,51 an jedem Ende beispielsweise unterschiedlich lang ausgebildet, wobei die zugehörigen Rastaussparungen 52,53 ebenfalls unterschiedlich lang sind. Dadurch können die Sperrzähne 50,51 nur nach einer Drehung von etwa 360° in die Raststellung gelangen. Die größere Zahl von Sperrzähnen erlaubt eine größere Kraftübertragung und damit auch eine höhere Spannkraft.

## Patentansprüche

1. Gurtanschlußvorrichtung (19, 19a) mit mindestens einem drehbaren, für den Gurt vorgesehenen Anschlußteil (22), der mit einem Griff (39) versehen, in einem Träger (20, 20a) gelagert und gegen Federkraft (Feder 35) aus einer Raststellung axial verschiebbar ist, in der er mit einem Sperrzahn (41 bzw. 40) an seinem einen Ende in eine Rastausnehmung (43 bzw. 42) des Trägers eingreift, der Öffnungen (28) für den Durchtritt des Anschlußteiles (22) aufweist,
dadurch **gekennzeichnet,**
daß der Anschlußteil (22) mindestens einen weiteren Sperrzahn (40 bzw. 41) aufweist, für den am Träger (20, 20a) mindestens eine weitere Rastausnehmung (42 bzw. 43) vorgesehen ist, und daß der mit einem Einführschlitz (23) für den Gurt versehene Anschlußteil (22) an seinem Griff (39) einen Anschlag (44) aufweist, mit dem er in der Raststellung unter der Federkraft an einem Gegenanschlag (45) des Trägers (20, 20a) anliegt.

2. Gurtanschlußvorrichtung nach Anspruch 1, dadurch gekennzeichnet, daß der weitere Sperrzahn (40) am Griff (39) vorgesehen ist.

3. Gurtanschlußvorrichtung nach einem der Ansprüche 1 oder 2, bei der der Träger U-förmig ausgebildet ist, dadurch gekennzeichnet, daß die Rastausnehmungen (42, 43) und die Längsmittelebene (A) des Einführschlitzes (23) unter einem spitzen Winkel (α) zur Längsmittelebene (B) der Trägerschenkel (26, 27) liegen.

4. Gurtanschlußvorrichtung nach einem der Ansprüche 1 bis 3, dadurch gekennzeichnet, daß der Anschlag (44) die dem Träger (20, 20a) zugewandte Seite des Griffes (39) ist.

5. Gurtanschlußvorrichtung nach einem der Ansprüche 1 bis 4, dadurch gekennzeichnet, daß der Griff (39) stegförmig ausgebildet ist.

6. Gurtanschlußvorrichtung nach einem der Ansprüche 1 bis 5, dadurch gekennzeichnet, daß die Länge des Griffes (39) größer ist als der Durchmesser der vom Anschlußteil (22) durchsetzten Öffnung (28) des benachbarten Trägerschenkels (27).

7. Gurtanschlußvorrichtung nach einem der Ansprüche 1 bis 6, dadurch gekennzeichnet, daß die beiden Sperrzähne (40, 41), in Achsrichtung des Anschlußteiles (22) gesehen, fluchtend zueinander liegen.

8. Gurtanschlußvorrichtung nach einem der Ansprüche 1 bis 7, dadurch gekennzeichnet, daß die Druckfeder (35) in einem Aufnahmeraum (38) untergebracht ist, der von einer mit dem Träger (20, 20a) verbundenen Hülse (36) umschlossen ist.

9. Gurtanschlußvorrichtung nach Anspruch 8, dadurch gekennzeichnet, daß der Aufnahmeraum (38) in Axialrichtung des Anschlußteiles (22) vom Träger (20, 20a) und von einem Widerlager (34) für die Druckfeder (35) begrenzt ist.

10. Gurtanschlußvorrichtung nach Anspruch 9, dadurch gekennzeichnet, daß das Widerlager (34) lösbar mit dem Anschlußteil (22) verbunden ist und innerhalb der Hülse (36) liegt.

11. Gurtanschlußvorrichtung nach einem der Ansprüche 8 bis 10, dadurch gekennzeichnet, daß die Hülse (36) an dem dem Griff (39) gegenüberliegenden Ende des Anschlußteiles (22) vorgesehen ist.

12. Gurtanschlußvorrichtung nach einem der Ansprüche 1 bis 11, dadurch gekennzeichnet, daß der Anschlußteil (22) im Bereich beider Enden jeweils wenigstens zwei Sperrzähne (50,51) aufweist, die diametral einander gegenüberliegen und unterschiedlich lang sind.

13. Gurtanschlußvorrichtung nach einem der Ansprüche 1 bis 12, dadurch gekennzeichnet, daß der Träger (20a) ein Anschlußstück (48) für einen Bauteil aufweist.

14. Gurtanschlußvorrichtung nach Anspruch 13, dadurch gekennzeichnet, daß das Anschlußstück (48) drehbar im Träger (20a) gelagert ist.


## Claims

1. Belt connection device (19, 19a) with at least one rigid, inelastic and rotary connection part (22) provided for the belt, which connection part is provided with a handle (39), is mounted in a support (20, 20a) and is axially displaceable against spring force (spring 35) from a locking position, in which it engages by a locking tooth (41 or 40) extending transversely to its longitudinal axis, at its one end, in a locking recess (43 or 42) of the support, which comprises openings (28) for the passage of the connecting part (22), characterised in that the connecting part (22) comprises at least one further locking tooth (40 or 41) extending transversely to the longitudinal axis of the connecting part and provided in the region of its other end, for which at least one further locking recess (42 or 43) is provided on the support (20, 20a) so that the locking teeth (40, 41) can be engaged in the locking recesses (42, 43) solely upon rotation of the connecting part (22) through 360°, and that the connecting part (22) provided with an insertion slot (23) for the belt comprises a stop (44) on its handle (39), by which stop it bears under the spring force against a counterstop (45) of the support (20, 20a) in the locked position.

2. Belt connection device according to Claim 1, characterised in that the further locking tooth (40) is provided on the handle (39).

3. Belt connection device according to one of Claims 1 or 2, in which the support has a U-shaped construction, characterised in that the locking recesses (42, 43) and the longitudinal central plane (A) of the insertion slot (23) lie at an acute angle (α) with respect to the longitudinal central plane (B) of the support legs (26, 27).

4. Belt connection device according to one of Claims 1 to 3, characterised in that the stop (44) is the side of the handle (39) facing the support (20, 20a).

5. Belt connection device according to one of Claims 1 to 4, characterised in that the handle (39) is constructed in the form of a web.

6. Belt connection device according to one of claims 1 to 5, characterised in that the length of the handle (39) is greater than the diameter of the opening (28) in the adjacent support leg (27) through which the connecting part (22) passes.

7. Belt connection device according to one of Claims 1 to 6, characterised in that the two locking teeth (40, 41) are aligned with respect to each other, seen in the axial direction of the connecting part (22).

8. Belt connection device according to one of Claims 1 to 7, characterised in that the compression spring (35) is located in a receiving chamber (38). which is surrounded by a sleeve (36) connected to the support (20, 20a).

9. Belt connection device according to Claim 8, characterised in that in the axial direction of the connecting part (22), the receiving chamber (38) is defined by the support (20, 20a) and by an abutment (34) for the compression spring (35).

10. Belt connection device according to Claim 9, characterised in that the abutment (34) is detachably connected to the connecting part (22) and lies within the sleeve (36).

11. Belt connection device according to one of Claims 8 to 10, characterised in that the sleeve (36) is provided at the end of the connecting part (22) opposite the handle (39%.

12. Belt connection device according to one of Claims 1 to 11, characterised in that in the region of both ends, the connecting part (22) comprises at least two locking teeth (50, 51) which lie diametrically opposite each other and are of different length.

13. Belt connection device according to one of Claims 1 to 12, characterised in that the support (20a) comprises a connecting member (49) for a component.

14. Belt connection device according to Claim 13, characterised in that the connecting member 448) is mounted to rotate in the support (20a).


## Revendications

1. Dispositif de raccordement de sangle (19, 19a), avec au moins un élément de raccordement (22), rigide, non-élastique, rotatif, prévu pour la sangle, muni d'une poignée (39), logé dans un support (20, 20a), et doté d'une possibilité de déplacement axial contre la force d'un ressort (35), à partir d'une position de verrouillage, dans laquelle il s'engage, par un cliquet (41 et/ou 40), prévu sur l'une de ses extrémités et transversal à son axe longitudinal, dans un cran (43 et/ou 42) du support, qui présente des ouvertures (28) pour le passage de l'élément de raccordement (22), caractérisé en ce que l'élément de raccordement (22) présente au moins un autre cliquet (40 et/ou 41), transversal à son axe longitudinal, prévu dans la zone de son autre extrémité, et pour lequel est prévu un autre cran au moins (42 et/ou 43) sur le support (20, 20a), de sorte que les cliquets (40, 41) ne peuvent s'engager dans les crans (42, 43) que pour une rotation de 360° de l'élément de raccordement (22), et en ce que l'élément de raccordement (22), muni d'une fente d'introduction (23) pour la sangle, présente sur sa poignée (39) une butée (44), par laquelle il s'applique sur une contre-butée (45) du support (20, 20a), en position de verrouillage, sous l'effet de la force du ressort.

2. Dispositif de raccordement de sangle suivant la revendication 1, caractérisé en ce que l'autre cliquet (40) est prévu sur la poignée (39).

3. Dispositif de raccordement de sangle suivant l'une des revendications 1 et 2, sur lequel le support est réalisé en U, caractérisé en ce que les crans (42, 43) et le plan médian longitudinal (A) de la fente d'introduction (23) se situent sous un angle aigu (α) par rapport au plan médian longitudinal (B) des branches (26, 27) du support.

4. Dispositif de raccordement de sangle suivant l'une quelconque des revendications 1 à 3, caractérisé en ce que la butée (44) est la face de la poignée (39), tournée vers le support (20, 20a).

5. Dispositif de raccordement de sangle suivant l'une quelconque des revendications 1 à 4, caractérisé en ce que la poignée (39) est réalisée en forme de traverse.

6. Dispositif de raccordement de sangle suivant l'une quelconque des revendications 1 à 5, caractérisé en ce que la longueur de la poignée (39) est supérieure au diamètre de l'ouverture (28), traversée par l'élément de raccordement (22), de la branche adjacente (27) du support.

7. Dispositif de raccordement de sangle suivant l'une quelconque des revendications 1 à 6, caractérisé en ce que les deux cliquets (40, 41), vu dans le sens axial de l'élément de raccordement (22), sont alignés mutuellement.

8. Dispositif de raccordement de sangle suivant l'une quelconque des revendications 1 à 7, caractérisé en ce que le ressort de pression (35) est logé dans un compartiment (38), enveloppé par une douille (36) reliée au support (20, 20a).

9. Dispositif de raccordement de sangle suivant la revendication 8, caractérisé en ce que le compartiment (38) est limité, dans le sens axial de l'élément de raccordement (22), par le support (20, 20a) et par une butée (34), prévue pour le ressort de pression (35).

10. Dispositif de raccordement de sangle suivant la revendication 9, caractérisé en ce que la butée (34) est reliée à l'élément de raccordement (22), avec une possibilité de démontage, et se situe à l'intérieur de la douille (36).

11. Dispositif de raccordement de sangle suivant l'une quelconque des revendications 8 à 10, caractérisé en ce que la douille (36) est prévue sur l'extrémité de l'élément de raccordement (22), opposée à la poignée (39).

12. Dispositif de raccordement de sangle suivant l'une quelconque des revendications 1 à 11, caractérisé en ce que l'élément de raccordement (22) présente, sur chacune de ses deux extrémités, deux cliquets (50, 51) au moins, diamétralement opposés et de longueur différente.

13. Dispositif de raccordement de sangle suivant l'une quelconque des revendications 1 à 12, caractérisé en ce que le support (20a) présente une pièce de jonction (48) pour un composant,

14. Dispositif de raccordement de sangle suivant la revendication 13, caractérisé en ce que la pièce de jonction (48) est logée dans le support (20a) avec une possibilité de rotation.

Fig. 2

Fig. 1

Fig.4

Fig.3

Fig. 6

Fig. 5

Fig. 7